# EUROPEAN PATENT SPECIFICATION

(11) **EP 0 334 474 B1**
(45) Date of publication and mention of the grant of the patent: **06.04.1994**
(21) Application number: 89301244.3
(22) Date of filing: 09.02.1989
(51) Int. Cl.: H02J 7/34, H01M 8/04

(54) **Control apparatus for a fuel cell generating system**
Steuergerät für ein Generatorsystem mit Brennstoffzellen
Appareil de commande pour un système générateur à pile à combustible

(30) Priority: 18.02.1988 JP 36333/88
(43) Date of publication of application: 27.09.1989
(73) Proprietor: FUJI ELECTRIC CO., LTD., Kawasaki-shi (JP)
(72) Inventor: Yamamoto, Osamu, Tiba-shi (JP)
(74) Representative: Carmichael, David Andrew Halliday

(56) References cited:
- US-A- 3 987 352
- US-A- 4 670 702
- US-A- 4 677 037
- US-A- 4 741 978
- US-A- 4 839 246
- US-A- 4 839 574

## Description

The present invention relates to control apparatus for a fuel cell generating system employed, for example, for a power supply for an electric car such as a fork-lift truck.

In general, in a fuel cell generating system formed by combining a fuel cell and a fuel reformer, it is difficult to have the output of the fuel cell follow the load variation with quick response particularly for use such as in the above-mentioned fork-lift truck in which the load is varied suddenly under operating conditions of travelling and cargo loading, since the response speed of the reformer is slow. Such being the case, there has already been proposed a hybrid fuel cell generating system in which a storage battery is connected to the output side of the fuel cell as a back-up for the fuel cell, electrical power deficiencies are made up from the storage battery under a heavy load operating condition in which the output of the fuel cell has to meet a heavy load. The storage battery is charged for recovery using surplus electric power from the fuel cell at times of light load or no load operation. Such a proposal is disclosed in Japanese Patent Application No. 121147/87.

On the other hand, when the storage battery continues to be charged by means of the fuel cell in a light load or no load operating state which continues for a long time, the storage battery becomes over-charged. Also, when an electrical power deficiency on the part of the fuel cell is made up from storage battery for a long time under a heavy load operating condition, the storage battery becomes over-discharged. If such over-charged and over-discharged states are repeated, the life of the storage battery is considerably shortened. A control unit for a fuel cell generating system has been proposed in which the charged level of the storage battery is monitored, the storage battery is held in a highly charged state so as to cope with a heavy load by controlling the output of the fuel cell in dependence on the residual capacity of the storage battery, and the stabilisation of electrical power supply to the load is arranged at the same time. Such a proposal is disclosed in Japanese Patent Application No. 110634/87.

In US-A-3987352 there is described a control apparatus for a fuel cell generating system with a storage battery back-up power supply, in which a charge level detector (18) and an output current controller (26) are provided. A controller (28) controls the output current controller (26) in dependence on a target charge value to be maintained in the storage battery.

In US-A-4677037, there is taught the control of the power output of a fuel cell so as to reduce the discharge current of a back-up storage battery.

It is highly desirable to maintain the storage battery of the generating system always in a state of high residual capacity so as to cope with a heavy load as when the load fluctuates suddenly in particular cargo handling states or motion states of a fork-lift truck. To this end, it is preferable to finish charging of the storage battery in the shortest possible time within the scope of providing a charging condition which does not shorten the life of the storage battery when taking advantage of the light load or no load operating condition.

The previously-proposed control systems only provide a basic control system that controls the output of the fuel cell variably in dependence on the charge level of the storage battery, and are insufficient to provide fine control of the output of the fuel cell based on the charging characteristics of the storage battery to satisfy the requirement for completion of the charging recovery of the storage battery in the shortest possible time under the allowable charging conditions that do not cause deterioration of performance of the storage battery as described above.

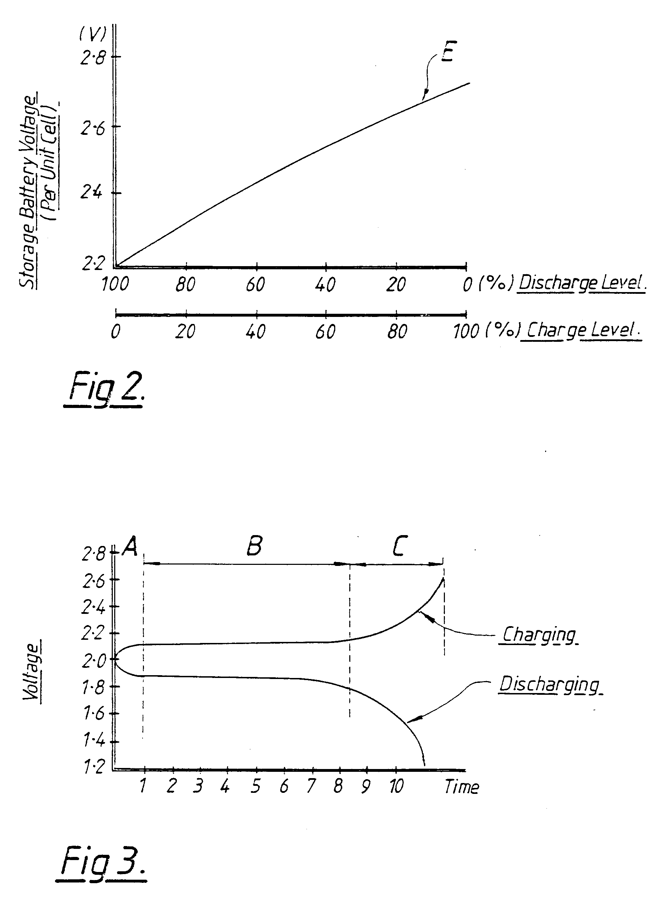

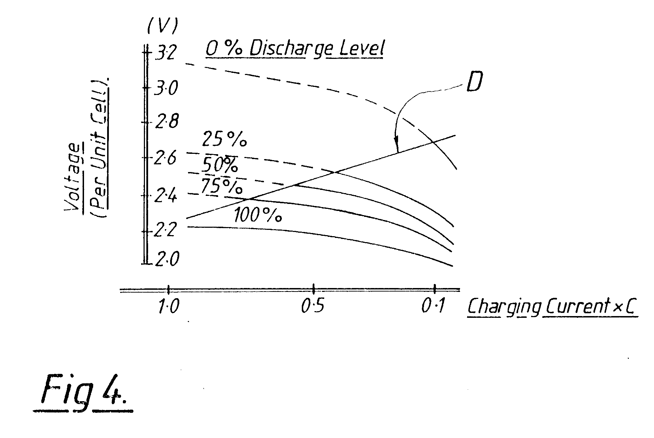

Referring first to Figure 3, there is shown for a lead acid storage battery, charging and discharging characteristics in terms of voltage against a regular time factor. In regions A and B of said characteristics, the battery reactions of charging and discharging are performed reversibly, whereas the stable reversible reaction collapses in the over-charged or over-discharged state represented by region C and an irreversible state is produced. It is known that, if the storage battery is used repeatedly in this region, the battery characteristics not only deteriorate, but also the life of the battery is shortened considerably. Referring to Figure 4, there is shown a current-to-voltage characteristic for the charging of each cell of a lead storage battery in terms of respective discharge levels (expressed as percentages of the fully discharged level), and a characteristic line D in Figure 4 represents a boundary for a permissible charging rate region. That is, safe charging operation can be performed only in a region of relatively small charging time rates below the intersection of each characteristic line for the respective discharging level and the boundary line D. Progressive deterioration of performance of the storage battery takes place rapidly if there is repeated rapid charging involving a relatively large charging current corresponding to the broken line region in Figure 4 which extends beyond the intersection of the line D with the discharge level characteristic line. In other words, when a storage battery is being charged for recovery, the allowable charging current, and therefore the allowable charging voltage, varies in dependence on the state of the residual capacity according to the characteristics of the storage battery. In particular, when light load operating times during intervals of heavy load operation are utilised as described above for the power supply of a fork-lift truck and it is required to charge the storage battery for recovery in a short time without causing deterioration of the battery characteristics, it is necessary to provide fine control of the charging for recovery using the charging conditions closest to the limit of the allowable charging rate region shown in Figure 4 as represented by the line D.

It is an object of the present invention to provide a control unit for a fuel cell generating system which makes it possible to perform fine control of the charging operation so as to charge the storage battery for recovery within the shortest possible time to reach the target charge level under charging conditions such as to avoid as far as possible deterioration of performance of the storage battery, and to provide optimum performance in a hybrid fuel cell generating system used in particular to provide a power supply subject to sharp load fluctuations such as in a fork-lift truck.

According to this invention, there is provided control apparatus for a hybrid fuel cell generating system arranged to supply electrical power to a load by connecting a storage battery as a back-up power supply to the output of a fuel cell, said control apparatus comprising means for controlling the power output of the fuel cell, means for detecting the residual capacity of the battery, and means for providing a predetermined target value for the charge capacity of the battery, characterised in that the apparatus further comprises means for controlling the output current drawn out of the fuel cell, means for detecting the voltage of the storage battery, a controller for controlling the power output control means and the output current control means in dependence on pre-set values of allowable charging voltages, as a function of the residual capacity of the battery, stored in the controller, and in dependence on the target charge capacity to be maintained, the pre-set allowable charging voltage values and the target charge capacity being predetermined based on charging characteristics of the storage battery, and means for comparing said values with detected values of the battery voltage and residual capacity obtained from said detecting means, the result of the comparison serving to provide a signal on the basis of which said controller is arranged to control the power output control means and the output current control means to hold the battery charging voltage at the highest level, corresponding to the stored voltage values as a function of the actual capacity of the battery, compatible with avoiding deterioration of the battery while bringing the residual capacity up to the target value in the shortest possible time.

Here, the set value of the allowable charging voltage and the target value of the charge level are stored in a memory provided in the controller, in which the target value of the charge level to be maintained is pre-set preferably at more than 80% of the rated value, and the charging control pattern is set in dependence on the residual capacity of the storage battery in accordance with an allowable charging rate boundary line E shown in Figure 2 and determined on the basis of the current-voltage characteristic of the storage battery shown in Figure 4. Also, the residual capacity of the storage battery is obtainable by monitoring the charge and discharge levels of the storage battery through charge level detecting means and computing a comparison with the rated capacity.

When electricity is discharged from the storage battery during heavy load operation with the generating system switched on and the residual capacity is lowered to less than 80%, the detected value of the charge level and the voltage value of the storage battery are compared with respective pre-set values stored in the memory of the controller as previously described, and the power output control means and the output current control means are controlled in dependence on the comparison result so as to have the power output and the output current of the fuel cell increase in such a way that the charging voltage for the storage battery, viz. the output voltage fed in parallel to the load and to the storage battery from the fuel cell does not exceed the pre-set value for the allowable charging voltage of the storage battery, thus charging for recovery until the storage battery reaches the target charge level. In addition, practical control is performed by means of a three-term control system arranged to give PID (proportional-integral-differential) control after determining the pre-set value at one point above the residual capacity of 80% of the storage battery or 2-position control which is performed by determining two points above the residual capacity of 80%.

In such a manner, by controlling the output of the fuel cell while controlling the charging voltage to the pre-set value of the allowable charging voltage in accordance with the residual capacity of the back-up storage battery, it is possible to charge the storage battery for recovery in a short time in such a way that deterioration of performance of the storage battery is not caused when the residual capacity of the storage battery is lowered to below the target value and to always feed stable electric power to the load corresponding to sharp fluctuations of the load at the same time.

An embodiment of this invention will now be described, by way of example, with reference to the accompanying drawings in which:-
Figure 1 is a block circuit diagram of control apparatus for a fuel cell generating system embodying the present invention;
Figure 2 is a graph of allowable charging voltage per unit cell against charge state of a storage battery of the control apparatus shown in Figure 1;
Figure 3 is a graph of the charging and discharging characteristics of the storage battery; and
Figure 4 is a set of graphs of charging current against charging voltage per unit cell characteristic of the storage battery.

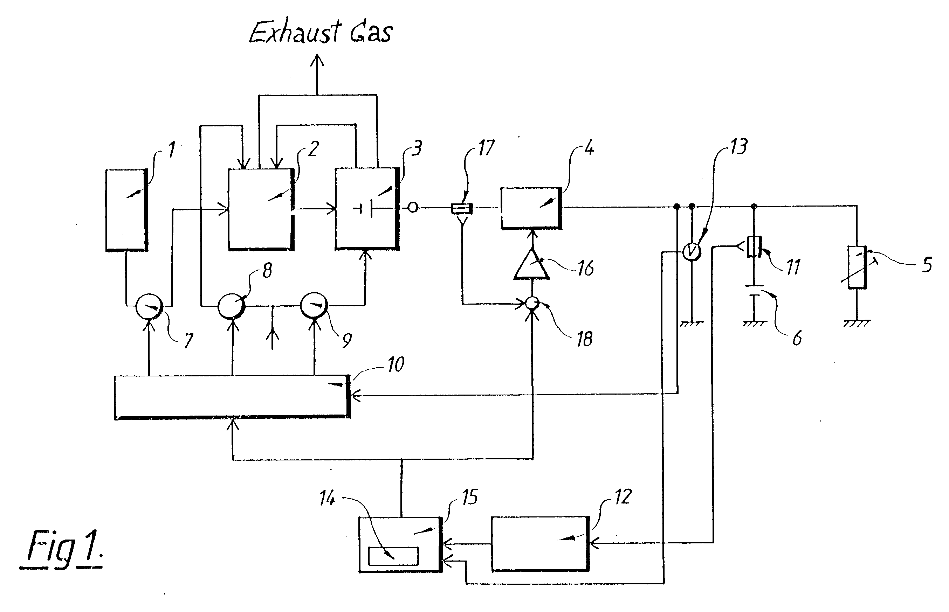

Referring to Figure 1, there is shown control apparatus for a fuel cell generating system which has a raw material tank 1 storing reforming raw material such as methanol, a reformer 2, a fuel cell 3, and a DC to DC converter 4 as means for controlling output current from the fuel cell 3.

The system also has a load 5 and a storage battery 6 for back-up. Also, a raw material transfer pump 7 is arranged for feeding reforming material to the reformer 2 from the raw material tank 1, a combustion air blower 8 is arranged for supplying combustion air to a burner of the reformer 2, and a reaction air blower 9 is arranged for supplying reaction air into the fuel cell 3. An auxiliary controller 10 is provided as output control means which performs control of the fuel cell output by controlling the operation of the various devices making up the fuel cell generating system.

The reformer 2 is arranged to obtain reforming reaction heat by burning the exhaust gas discharged from the fuel cell 3, and the electric power consumed by the various devices and the auxiliary controller 10 is obtained from the output side of the fuel cell 3.

In addition, for control of the fuel cell generating system, control apparatus is provided by the output control means of the fuel cell, a current detector 11 for the storage battery 6 including an output current control means, an ampere hour meter 12 for calculating charging and discharging currents for the storage battery as detected by said current detector 11, a voltage detector 13 for the storage battery and a controller 15 which outputs a control command signal Ifc to the auxiliary controller 10 and to the DC to DC converter 4 in dependence on the result of comparison of signals from the ampere hour meter 12 and the voltage detector 13 and a charge level target value (a value higher than a residual capacity of 80%) of the storage battery as stored in a memory 14, with a pre-set value for the allowable charging voltage given in accordance with the control pattern shown in Figure 2. The DC to DC converter 4 has a controller 16 and an output current detector 17 for the fuel cell 3 detects the current on the input side of the DC to DC converter 4. A comparator 18 is provided for comparing the detected signal of said current detector 17 with the command signal Ifc from the controller 15.

In operation, when the fuel cell generating system is operated, power is fed to the load 5 and the detected values of charge level and discharge level and the voltage of the storage battery 6 are input to the controller 15 through the current detector 11, the ampere hour meter 12 and the voltage detector 13 respectively. The controller 15 computes the residual capacity of the storage battery 6 and also compares the charge level target value (a value higher than the residual capacity of 80%) of the storage battery that is stored in the memory 14, with the charging voltage pre-set value corresponding to the residual capacity of the storage battery in accordance with the control pattern of the allowable charging voltage boundary line E shown in Figure 2, and the command signal Ifc is output from the controller 15 based on the result of such comparison.

This command signal is supplied to the auxiliary controller 10, which serves to control the raw material transfer pump 7, the combustion air blower 8 and the reaction air blower 9 in accordance with the command signal Ifc, thereby controlling the output of the fuel cell 3. At the same time, the command signal Ifc is compared in the comparator 18 with the output signal from the fuel cell current detector 17, the DC to DC converter 4 is controlled by means of the controller 16 using the result of the comparison as the control signal, and the output current of the converter 4 is varied so as to vary the output current of the fuel cell supplied to the load 5 and the storage battery 6 in dependence on the command signal Ifc. In this operating state electricity can be discharged from the storage battery 6 so as to make up any power shortage to the load 5 when there is an increase in the load. As a result, the residual capacity is lowered below the charge level target value and so the voltage of the storage battery 6 falls into the range of the allowable charging voltage. Accordingly, the controller 15 outputs the command signal Ifc so as to increase the output current of the DC to DC converter 4 but so as not to exceed the pre-set value of the allowable charging voltage corresponding to the allowable charging voltage boundary line E of the control pattern shown in Figure 2.

The same command signal Ifc is applied to the auxiliary controller 10 before the current of the DC to DC converter is increased so that the output of the fuel cell is increased. With this, the output current of the DC to DC converter 4 is increased with some delay in time following the output of the fuel cell.

This controlled state is continued until the charge level of the storage battery 6 reaches the target value (a particular value above the residual capacity of 80%), and during this charging process, charging for recovery is performed by arranging that the command signal Ifc which is output from the controller 15 varies instantaneously so that the allowable charging voltage pre-set value changes, following the allowable charging voltage boundary line E given by the control pattern in Figure 2 with increase in the charge level of the storage battery 6. This control operation is performed by a control method such as PID control or 2-position control as previously described.

When the charge level of the storage battery 6 recovers to the target value, the output of the fuel cell is controlled by means of the controller 15 so as to be lowered to the original operating level. In the case of no external load such as the time of interruption of operation of a fork-lift truck described above, the fuel cell is controlled to stop once the storage battery is charged.

The embodiment described above thus provides control apparatus for a hybrid fuel cell generating system arranged to perform electrical power supply to a load by connecting to the output of a fuel cell a storage battery as a back-up power supply, said control apparatus comprising means for controlling the power output of the fuel cell, means for controlling the output current drawn out of the fuel cell, means for detecting the voltage of the storage battery, means for detecting the charge level of the storage battery, and a controller for controlling the power output control means and the output current control means in dependence on a pre-set value of an allowable charging voltage corresponding to the charged level of the storage battery, and in dependence on a target value for the charge level to be maintained, said pre-set allowable charging voltage value and said target charge level value being predetermined based on charging characteristics of the storage battery, means being provided for comparing said values with detected values of the voltage and charge level of the storage battery respectively obtained from said detecting means, the result of the comparison serving to provide a signal on the basis of which said controller is arranged to control the power output control means and the output current control means.

By controlling the output of the fuel cell while controlling the charging voltage not to exceed the allowable value thereby to charge the storage battery for recovery to reach the target value after the residual capacity of the storage battery has dropped to below the target value because of discharging from the storage battery due to an increase in the load, the control apparatus described above provides a fuel cell generating system having desirable characteristics particularly when used as a power supply with sharp load variation such as in a fork-lift truck, so that it is possible to complete charging of the storage battery in a short time under charging conditions such that there is minimal deterioration of performance of the storage battery, thus generally holding the storage battery at a high charge level which is able to cope with heavy loads without shortening the life of the storage battery and also performing stable power supply to the load.

## Claims

1. Control apparatus for a hybrid fuel cell generating system arranged to supply electrical power to a load (5) by connecting a storage battery (6) as a back-up power supply to the output of a fuel cell (3), said control apparatus comprising means (10) for controlling the power output of the fuel cell (3), means (12) for detecting the residual capacity of the battery (6), and means (15) for providing a predetermined target value for the charge capacity of the battery (6), characterised in that the apparatus further comprises means (4) for controlling the output current drawn out of the fuel cell (3), means (13) for detecting the voltage of the storage battery (6), a controller (15) for controlling the power output control means (10) and the output current control means (4) in dependence on pre-set values of allowable charging voltages, as a function of the residual capacity of the battery (6), stored in the controller (14, 15), and in dependence on the target charge capacity to be maintained, the pre-set allowable charging voltage values and the target charge capacity being predetermined based on charging characteristics of the storage battery (6), and means (15) for comparing said values with detected values of the battery voltage and residual capacity obtained from said detecting means (12, 13), the result of the comparison serving to provide a signal on the basis of which said controller (15) is arranged to control the power output control means (10) and the output current control means (4) to hold the battery charging voltage at the highest level, corresponding to the stored voltage values as a function of the actual capacity of the battery (6), compatible with avoiding deterioration of the battery (6) while bringing the residual capacity up to the target value in the shortest possible time.

2. An apparatus according to Claim 1, characterised in that a DC to DC converter (4) is provided as an output current control means for the fuel cell (3).

3. An apparatus according to Claim 1 or Claim 2, characterised in that an output power control means (10) for the fuel cell (3) controls the supply and combustion of a raw material to the fuel cell (3) in dependence on the comparison in a comparator (18) of the detected values of voltage and charge level of the storage battery (6) with the allowable charging voltage and the target charge level.

## Patentansprüche

1. Regelgerät für ein System zur Erzeugung von hybriden Brennstoffzellen, das einen Verbraucher (5) mit Strom versorgt, indem es eine Speicherbatterie (6) als Notstromversorgung mit dem Ausgang einer Brennstoffzelle (3) verbindet, wobei das Regelgerät Mittel (10) zur Regelung der Nutzleistung der Brennstoffzelle (3), Mittel (12) zur Feststellung der Restladung der Batterie (6) und Mittel (15) zur Bereitstellung einem vorherbestimmten Sollwerts des Ladevermögens der Batterie (6) umfaßt, dadurch gekennzeichnet, daß das Gerät ferner Mittel (4) zur Regelung des Ausgangsstroms, der der Brennstoffzelle (3) entnommen wird, Mittel (13) zur Ermittlung der Spannung der Speicherbatterie (6), ein Regelgerät (15) zur Regelung des Nutzleistung-Regelmittels (10) und des Ausgangsstroms-Regelmittels (4) umfaßt, in Abhängigkeit von voherfestgesetzten Werten zulässiger Ladespannungen, die als Funktion der Restladung der Batterie (6) im Regelgerät (14,15) gespeichert sind, und in Abhängigkeit vom aufrechtzuerhaltenden Soll-Ladevermögen, wobei die vorherfestgesetzten zulässigen Spannungswerte und das Soll-Ladevermögen auf den Ladekurven der Speicherbatterie (6) basierend vorher festgesetzt werden, und Mittel (15) zum Vergleichen der Werte mit den durch die Nachweismittel (12,13) erhaltenen Werte der Batteriespannung und der Restladung, wobei das Vergleichsergebnis dazu dient, ein Signal auf der Ebene bereitzustellen, auf deren Basis das Regelgerät (15) zur Regelung des Nutzleistung-Regelmittels (10) und das Ausgangsstrom-Regelmittels (4) ausgerichtet ist, um die Ladespannung der Batterie auf dem höchsten Niveau zu halten entsprechend den gespeicherten Spannungswerten als eine Funktion der effektiven Ladung der Batterie (6), indem eine Verschlechterung der Batterie (6) dadurch vermieden wird, daß die Restladung schnellst möglich auf den Sollwert gebracht wird.

2. Gerät nach Anspruch 1, dadurch gekennzeichnet, daß ein Gleichstromwandler (4) als ein Ausgangsstrom-Regelmittel für die Brennstoffzelle (3) vorgesehen ist.

3. Gerät nach Anspruch 1, dadurch gekennzeichnet, daß ein Nutzleistung-Regelmittel (10) für die Brennstoffzelle (3) die Versorgung der Brennstoffzelle (3) mit einem Rohstoff und dessen Verbrennung regelt, in Abhänigigkeit von einem in einem Komparator durchgeführten Vergleich der ermittelten Spannungs- und Ladungsniveauwerte der Speicherbatterie (6) mit der zulässigen Ladespannung und dem Soll-Ladeniveau.

## Revendications

1. Dispositif de commande pour un système générateur hybride à pile à combustible agencé pour fournir une puissance électrique à une charge (5) en reliant une batterie de stockage (6) en tant qu'alimentation auxiliaire de puissance à la sortie d'une pile à combustible (3), ledit dispositif de commande comprenant des moyens (10) pour commander la sortie de puissance de la pile à combustible (3), des moyens (12) pour détecter la capacité résiduelle de la batterie (6), et des moyens (15) pour déterminer une valeur cible prédéterminée pour la capacité de charge de la batterie (6), caractérisé en ce que le dispositif comprend en outre des moyens (4) pour commander le courant de sortie tiré de la pile à combustible (3), des moyens (13) pour détecter la tension de la batterie de stockage (6), une unité de commande (15) pour commander les moyens de commande de sortie de puissance (10) et les moyens de commande de courant de sortie (4) en dépendance de valeurs préétablies de tensions de charge admissibles, en fonction de la capacité résiduelle de la batterie (6), stockées dans l'unité de commande (14, 15) et en dépendance de la capacité de charge cible à maintenir, les valeurs de tension de charge admissibles préétablies et la capacité de charge cible étant déterminées sur la base de caractéristiques de charge de la batterie de stockage (6), et des moyens (15) pour comparer lesdites valeurs avec des valeurs détectées de la tension de la batterie et de la capacité résiduelle obtenue desdits moyens de détection (12, 13), le résultat de la comparaison servant à fournir un signal sur la base duquel ladite unité de commande (15) est agencée pour commander les moyens de commande de sortie de puissance (10) et les moyens de commande de courant de sortie (4) pour maintenir la tension de charge de la batterie au niveau le plus élevé, correspondant aux valeurs de tension stockées en fonction de la capacité actuelle de la batterie (6), compatibles pour éviter une détérioration de la batterie (6) tout en amenant la capacité résiduelle jusqu'à la valeur cible en une durée aussi courte que possible.

2. Dispositif selon la revendication 1, caractérisé en ce qu'un convertisseur de courant continu en courant continu (4) est prévu en tant que moyen de commande du courant de sortie pour la pile à combustible (3).

3. Dispositif selon la revendication 1 ou la revendication 2, caractérisé en ce qu'un moyen de commande de puissance de sortie (10) pour la pile à combustible (3) commande l'alimentation et la combustion d'une matière première dans la pile à combustible (3) en fonction de la comparaison dans un comparateur (18) des valeurs détectées de la tension et du niveau de la charge de la batterie de stockage (6) avec la tension de charge admissible et le niveau de charge cible.
